(19) **Europäisches Patentamt European Patent Office Office européen des brevets**

(11) **EP 4 263 110 B1**

(12) **FASCICULE DE BREVET EUROPEEN**

(45) Date de publication et mention de la délivrance du brevet:
**03.09.2025 Bulletin 2025/36**

(21) Numéro de dépôt: **21836501.3**

(22) Date de dépôt: **13.12.2021**

(51) Classification Internationale des Brevets (IPC):
**B23K 26/00** (2014.01)      **B23K 26/0622** (2014.01)
**B23K 26/06** (2014.01)      **B23K 26/122** (2014.01)
**B23K 26/12** (2014.01)      **B23K 26/356** (2014.01)

(52) Classification Coopérative des Brevets (CPC):
**B23K 26/0006; B23K 26/0622; B23K 26/0665;
B23K 26/122; B23K 26/127; B23K 26/356**

(86) Numéro de dépôt international:
**PCT/EP2021/085505**

(87) Numéro de publication internationale:
**WO 2022/128926 (23.06.2022 Gazette 2022/25)**

(54) **SYSTEME ET PROCÉDÉ DE TRAITEMENT DE MATERIAU PAR CHOC LASER EN RÉGIME DE CONFINEMENT DANS UN LIQUIDE**

SYSTEM UND VERFAHREN ZUR BEHANDLUNG VON MATERIAL DURCH LASERSCHOCK UNTER EINSCHLUSS IN EINER FLÜSSIGKEIT

SYSTEM AND METHOD FOR TREATING MATERIAL BY LASER SHOCK UNDER CONFINEMENT IN A LIQUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013433**

(43) Date de publication de la demande:
**25.10.2023 Bulletin 2023/43**

(73) Titulaires:
• **THALES**
**92190 Meudon (FR)**
• **Centre National de la Recherche Scientifique**
**75016 Paris (FR)**

(72) Inventeurs:
• **RONDEPIERRE, Alexandre**
**78995 Élancourt (FR)**
• **ROUCHAUSSE, Yann**
**75013 Paris (FR)**
• **BERTHE, Laurent**
**75013 Paris (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2015/062457      US-A1- 2016 288 258
US-A1- 2019 010 576**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE DE L'INVENTION**

La présente invention concerne le domaine du traitement des matériaux par choc laser, basé sur la génération d'un plasma confiné à la surface de la cible à traiter, et qui génère une onde de choc dans le matériau, et plus particulièrement un système et un procédé de traitement d'une cible par choc laser en régime de confinement dans un liquide tels que définis dans le préambule des revendications 1 et 6 (voir US 2019/010576 A1 par exemple).

**ETAT DE LA TECHNIQUE**

Le choc laser est un procédé laser permettant d'apporter rapidement de l'énergie sur une cible (typiquement métallique ou en matériau composite) afin de créer un plasma de très haute pression. On génère par ce procédé une onde de choc très intense (pressions de l'ordre du GPa), permettant de réaliser différentes applications.

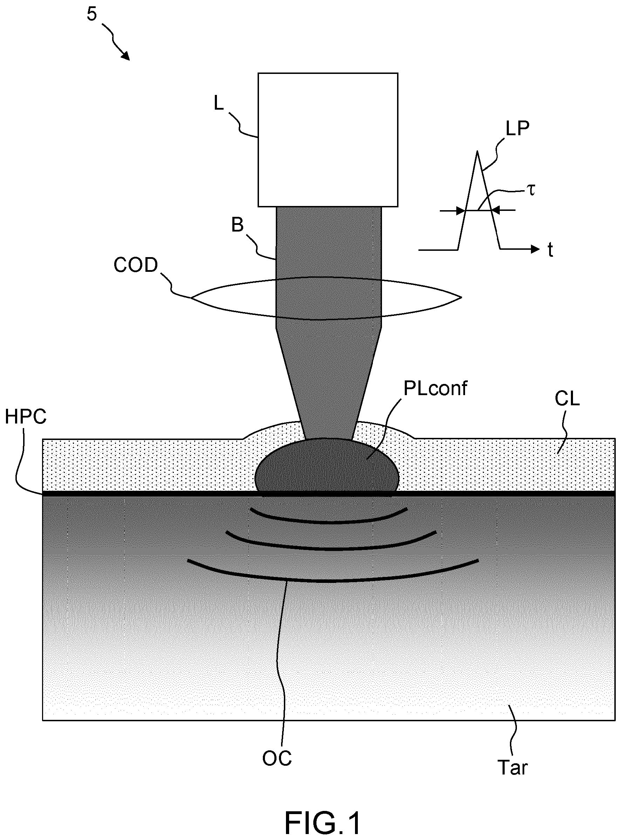

Un exemple de système 5 mettant en œuvre le traitement par choc laser connu de l'état de la technique est illustré figure 1. Il comprend un laser impulsionnel L générant un faisceau B sous la forme d'impulsions LP et un dispositif optique de concentration COD de focale f configuré pour concentrer le faisceau B sur la surface de la cible Tar à traiter. Classiquement la cible n'est pas placée dans le plan focal du dispositif COD, car pour les applications précitées on recherche un diamètre du faisceau sur la surface de la cible, à l'interface avec le milieu de confinement, de l'ordre du mm (typiquement compris entre 0.3 mm et 10 mm).

Le laser crée par ablation laser un plasma PLconf de très haute pression. Un milieu de confinement est placé sur la surface ablatée par laser. Le confinement le plus usuel et pratique industriellement est une couche fine CL d'un milieu transparent au laser (eau, autre liquide transparent au laser, quartz, scotch polymère, ...), typiquement d'une épaisseur de 1 à quelques mm. Le régime confiné permet d'augmenter considérablement la pression du plasma et sa durée d'application sur la cible. Optionnellement un revêtement thermo-protecteur HPC est déposé sur la cible à traiter. On génère avec ce système une onde de choc OC très intense, avec des pressions de l'ordre du GPa, permettant de réaliser différentes applications.

L'interaction laser/matière et le traitement par choc laser sont par exemple décrits dans les publications :

- Sollier et al : « Laser-matter interaction in laser chock processing », First international symposium on High power laser Macroprocessing, SPIE n° 4831, pages 463- 467 (2003),

- J.T Wang et al : «Effects of laser shock peening on stress corrosion behavior of 7075 aluminium alloy laser welded joints », Material Science & Engineering A647 pages 7-14 (2015).

Pour générer le plasma et donc l'onde de choc dans de bonnes conditions pour opérer le traitement, il convient d'utiliser un laser avec une durée d'impulsion $\tau$ typiquement comprise entre 1 ns et 30 ns et d'énergie E comprise entre 0.5 et 10 J, focalisée sur la cible selon une taille comprise entre 0.3 et 10 mm, ces différents paramètres étant choisis en fonction de l'application visée.

Les principales applications sont :

- les tests d'adhérence et le désassemblage par choc (LASAT - LAser Shock Adhesion Test) ; deux ondes de choc sont générées par deux impulsions laser décalées dans le temps et se rencontrent à la jonction de l'assemblage à tester ou à désassembler, une forte contrainte de traction est nécessaire (publication de référence : Berthe et al : « State-of-the-art laser adhesion test (LASAT) », Nondestructive Testing and Evaluation, Vol. 26, Nos. 3-4, pages 303-317 (2011)),

- le renforcement de surface par grenaillage laser (LSP - Laser Shock Peening) ; la forte pression appliquée par le plasma, et transmise à la cible via l'onde de choc, permet de plastifier la cible et d'en améliorer les propriétés (résistance, durée de vie,...) (publication de référence : Montross et al : « Laser shock processing and its effects on microstructure and properties of metal alloys: a review », International Journal of Fatigue 24, pages 1021-1036 (2002)),

- la caractérisation de matériaux sous hautes pressions.

Ces applications concernent principalement la recherche scientifique et différents domaines d'activités industrielles comme l'aéronautique, le nucléaire ou le naval.

Le paramètre important pour ces systèmes est la densité de puissance ou intensité I irradiant la cible exprimée en GW/cm$^2$, puisque la pression générée est proportionnelle à la racine carrée de l'intensité laser (voir par exemple la publication de Fabbro et al : « Physical study of laser produced plasma in confined geometry », Journal of Applied Physics, 68(2), pages 775-784 (1990) ).

$$P \propto \sqrt{I}$$

avec l'intensité laser I (GW/cm$^2$) définie selon la formule :

$$I = \frac{E}{\tau S} \qquad (1)$$

où E est l'énergie laser par pulse (J), $\tau$ la durée d'impulsion laser (ns) et S la surface irradiée par le laser (cm$^2$)

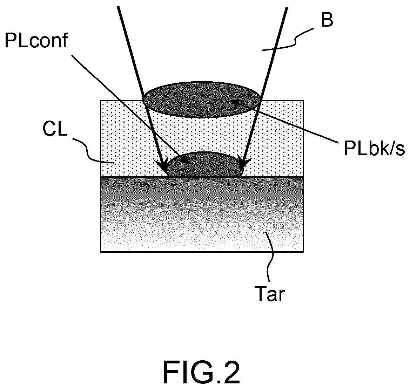

Cependant, il n'est pas possible d'augmenter indéfiniment la pression générée en augmentant l'intensité laser irradiant la cible car l'intensité laser transmise sur cible sature par un mécanisme de claquage apparaissant en surface du confinement. En effet le régime d'interaction laser/matière dans le choc laser met en jeu deux types de plasmas différents : le plasma confiné PLconf qui se développe au niveau de la surface de la cible, c'est-à-dire de l'interface cible-liquide de confinement illustré figure 1, et un plasma de claquage PLbk/s apparaissant à la surface du liquide, illustré figure 2 et dû à un phénomène de ionisation du milieu de confinement.

Ce plasma de claquage est par exemple étudié dans la publication de Sollier et al « Numerical modeling of the transmission of breakdown plasma generated in water during laser shock processing », Eur. Phys. AP, vol 16, pages 131-139 (2001).

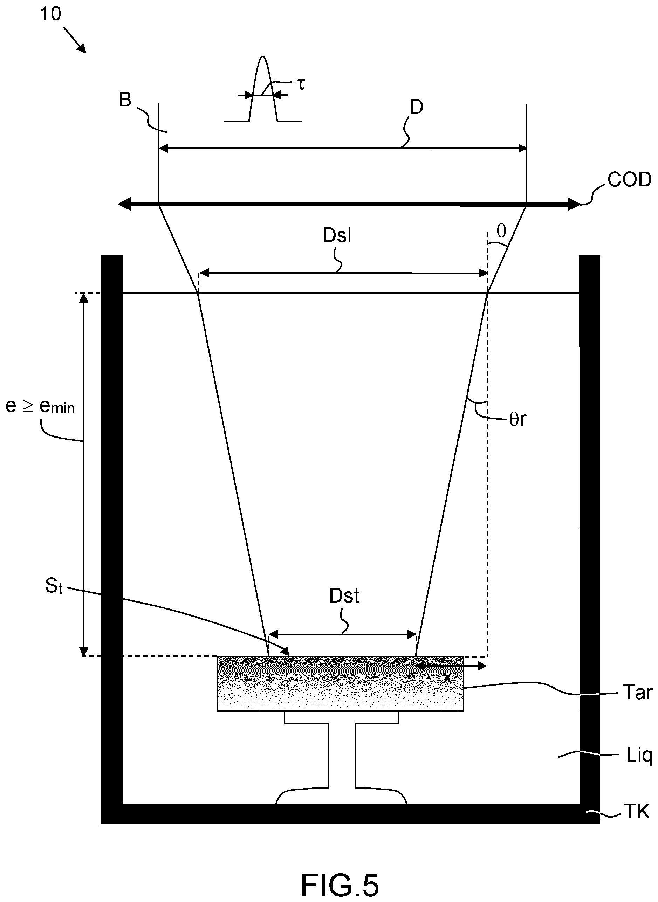

Le plasma de claquage PLbk/s qui apparaît est opaque au rayonnement laser et absorbe ainsi le reste de l'énergie contenue dans l'impulsion laser. Il résulte de ce phénomène de claquage que l'intensité maximale irradiant une cible en choc laser confiné est bornée par l'intensité seuil de claquage dans le milieu de confinement. Ce phénomène est visible sur la figure 5 de la publication précitée : au-delà d'une intensité incidente seuil à la surface du milieu de confinement (ici de l'eau), que nous dénommerons Ibk, d'environ 8 GW/cm$^2$ (avec par exemple : $\lambda$=1064 nm et $\tau$ = 25 ns) l'intensité du pulse transmis par le milieu de confinement sature alors que l'intensité incidente augmente.

Par conséquent, la pression maximale que l'on peut générer par choc laser est aussi bornée. Comme l'épaisseur de la couche d'eau est faible devant la focale utilisée (1 à 3mm d'épaisseur versus une focale de 300 à 500 mm par exemple), on peut considérer que l'intensité à la surface de la cible Ist est sensiblement égale à l'intensité à la surface de l'eau Isl, et donc que l'intensité maximale que l'on peut appliquer à la surface de la cible est également de 8 GW/cm$^2$. Avec cette intensité appliquée de 8 GW/cm$^2$ la pression maximale obtenue par choc laser dans la gamme de durée d'impulsion 5-15 ns est d'environ 8 GPa.

Pour pouvoir désassembler certains assemblages résistants ou épais, les pressions obtenues aujourd'hui par choc laser sont trop faibles. De même, il faut généralement une pression supérieure à 2,5 fois la limite élastique pour pouvoir renforcer de manière optimale la cible par grenaillage laser, et les pressions actuelles ne permettent donc pas de traiter l'ensemble des matériaux, notamment les plus résistants.

Ainsi, pouvoir augmenter la valeur maximale de pression permettrait de répondre à des besoins existants et aujourd'hui non satisfaits.

Quelques solutions sont aujourd'hui possibles pour augmenter la pression sur la cible :

Réduction de la durée d'impulsion laser.

Il est démontré dans la littérature (expérimentalement et théoriquement) que dans un milieu de confinement donné, l'intensité laser seuil de claquage Ipk est inversement proportionnelle à la racine carrée de la durée d'impulsion laser ( $I_{pk} \propto 1/\sqrt{\tau}$ ). Ainsi, pour augmenter l'intensité laser maximale irradiant la cible (et donc la pression maximale créée) une solution est de réduire la durée d'impulsion du système laser utilisé puisque l'intensité seuil de claquage augmentera.

Cependant bien que cette solution permette d'augmenter la pression maximale générée par le plasma, elle pose des problèmes de viabilité et d'utilité : en effet, la durée de l'onde de choc dépend de la durée de l'impulsion laser (environ 2 fois sa valeur), et l'amortissement d'une onde de choc augmente d'autant plus que sa durée est courte. L'onde ainsi générée s'amortira plus rapidement dans la cible traitée (car la durée d'impulsion laser a été diminuée) et la pression « utile » (au cœur du matériau, et pas en surface) ne sera donc pas augmentée, voire aura diminué.

Utilisation du régime dit direct :

Une seconde solution consiste à se passer du régime confiné, et d'utiliser le régime d'irradiation direct: il n'y a donc plus de confinement autour de la cible pour augmenter sa pression. Le régime direct permet cependant d'obtenir des pressions similaires au régime confiné en utilisant des intensités laser 10 à 100 fois plus élevées. Il faut en revanche réaliser un vide poussé autour de la cible pour éviter tout phénomène de claquage dans l'air, très probable à ces niveaux d'intensités. Cette seconde solution est difficile à appliquer industriellement car elle requiert d'une part de faire le vide autour de la pièce à traiter, et d'autre part nécessite des systèmes lasers très énergétiques, donc onéreux et encombrants.

Utilisation d'un champ magnétique ou électrique (Brevet N° CN201210571521 et N° US10745776) au moment de la création du plasma, pour apporter (par transfert) une énergie supplémentaire au plasma. Mais ces solutions n'ont pas donné de résultat probant et n'augmentent pas significativement les niveaux de pression générées ou sont trop compliquées à mettre en œuvre et à calibrer.

Le document WO2015/062457 décrit un traitement par choc laser dans un milieu liquide.

Un but de la présente invention est de remédier aux inconvénients précités en proposant un système permettant d'augmenter l'intensité maximale à la surface de la cible, et donc d'augmenter la pression transmise à la cible par choc laser. Par ailleurs le système selon l'invention est économique car il ne nécessite pas de modifier les lasers utilisés dans les systèmes de choc laser existant.

## DESCRIPTION DE L'INVENTION

La présente invention a pour objet un système de traitement d'une cible par choc laser en régime de confinement dans un liquide défini dans la revendication 1, le système comprenant :

- un laser impulsionnel générant un faisceau présentant une durée d'impulsion $\tau$ comprise entre 1 ns et 30 ns et une longueur d'onde $\lambda$,
- un dispositif optique de concentration présentant une focale f et configuré pour concentrer le faisceau à la surface de la cible, le faisceau laser incident sur le dispositif de concentration présentant un diamètre D,
- une cuve remplie dudit liquide présentant un indice de réfraction n,

une valeur souhaitée du diamètre du faisceau sur une surface de la cible étant prédéterminée et dénommée Dst, une épaisseur e de liquide traversée par le faisceau avant d'atteindre la surface de la cible étant choisie de manière à ce qu'une intensité laser à la surface du liquide soit inférieure ou égale à une intensité laser à la surface de la cible divisée par 2.

Conformément à l'invention, l'épaisseur e est choisie supérieure ou égale à une épaisseur minimale $e_{min}$ définie par :

$$e_{min} = \frac{D_{st}(\sqrt{2} - 1)}{2 \tan\left( \arcsin\left( \frac{\arctan\left(\frac{D}{2f}\right)}{n} \right) \right)}$$

Selon un mode de réalisation le système selon l'invention comprend en outre un élément configuré pour homogénéiser le faisceau et disposé sur le trajet optique dudit faisceau.

Selon un mode de réalisation une énergie E du laser et le dispositif optique de concentration sont configurés de sorte que l'intensité laser à la surface de la cible est comprise entre 0.1 GW/cm$^2$ et 25 GW/cm$^2$ et ladite valeur prédéterminée Dst est comprise entre 0.3 à 10 mm.

Selon un mode de réalisation le liquide présente un coefficient d'absorption à ladite longueur d'onde inférieur ou égal à 0.1/m$^2$.

Selon un mode de réalisation le liquide est l'eau et la longueur d'onde $\lambda$ du laser est comprise dans l'intervalle [350 nm ; 600 nm].

Selon un autre aspect l'invention concerne un procédé de traitement d'une cible par choc laser en régime de confinement dans un liquide tel que défini dans la revendication 6, le procédé comprenant:

- disposer d'une cuve remplie dudit liquide et contenant la cible,
- générer un faisceau présentant une durée d'impulsion $\tau$ comprise entre 1 ns et 30 ns avec un laser impulsionnel,
- concentrer le faisceau à la surface de la cible immergée avec un dispositif optique de concentration de focale f, le faisceau incident sur le dispositif optique de concentration présentant un diamètre D,
- positionner la cible dans la cuve puis illuminer la surface avec le faisceau, de sorte que le faisceau traverse une épaisseur e de liquide au moins égale à une épaisseur minimale e$_{min}$ avant d'atteindre la surface de la cible et de sorte que le diamètre du faisceau sur la surface de la cible soit égal à une valeur prédéterminée Dst,

l'épaisseur minimale de liquide e$_{min}$ étant définie par :

$$e_{min} = \frac{D_{st}(\sqrt{2} - 1)}{2 \tan\left(\arcsin\left(\frac{\arctan\left(\frac{D}{2f}\right)}{n}\right)\right)}$$

une intensité laser à la surface du liquide étant alors strictement inférieure à une intensité laser à la surface de la cible divisée par 2.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée illustre un système de caractérisation par choc laser selon l'état de l'art.

La figure 2 déjà citée illustre les deux plasmas intervenant dans le mécanisme du choc laser.

La figure 3 illustre le protocole de mesure utilisé pour démontrer l'existence d'un mécanisme de claquage en volume.

La figure 4 illustre l'évolution de la transmission en fonction de l'intensité maximale Imax atteinte dans le milieu de confinement, pour les deux cas (points croix couche d'eau de 2 mm, points cercle couche d'eau de 15 cm).

La figure 5 illustre un système de traitement d'une cible par choc laser selon l'invention.

La figure 6 illustre la pression appliquée via le plasma de confinement en fonction de l'intensité maximale atteinte dans le milieu de confinement, pour les deux cas précédents (points croix couche d'eau de 2 mm, points cercle couche d'eau de 15 cm).

## DESCRIPTION DETAILLEE DE L'INVENTION

L'invention est fondée sur une étude des inventeurs portant sur le mécanisme de claquage dans le système de choc laser.

Tout d'abord les travaux des inventeurs ont permis de démontrer pour la première fois qu'il existe en fait deux modes de claquage, le claquage via la surface du milieu de confinement, connu de l'état de l'art, et le claquage dans le volume du milieu de confinement. Ce claquage en volume n'a pas été étudié dans les architectures de choc laser car les couches de confinement utilisées sont toujours très fines, à des épaisseurs pour lesquelles ce claquage n'apparait pas. Ce claquage en volume devient visible lorsque l'on augmente l'épaisseur du milieu de confinement traversée.

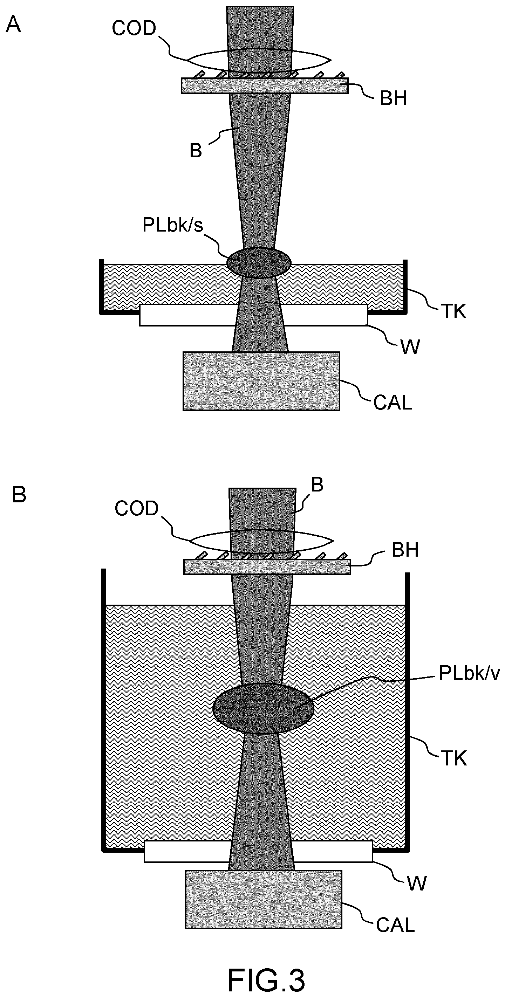

Les inventeurs ont mis en évidence expérimentalement l'existence de ce mécanisme de claquage en volume par le protocole de mesure schématisé figure 3. La partie A correspond à la situation selon l'état de l'art (faible épaisseur d'eau, ici 2 mm) et la partie B à une mesure réalisée avec une épaisseur d'eau plus importante (15 cm).

On mesure dans les deux cas une transmission T=Et/Ei avec Ei énergie incidente à la surface extérieure du milieu de confinement et Et énergie transmise après la traversée de l'épaisseur de liquide. L'énergie Ei est connue et la mesure de Et est effectuée avec un calorimètre CAL récupérant le faisceau transmis via une fenêtre W localisée au fond de la cuve TK.

Pour cette mesure on a une longueur d'onde de 532 nm, une durée d'impulsion $\tau$ de 7.2 ns, un faisceau présentant un diamètre initial de 20 mm et un dispositif de concentration avec une focal de f = 80 mm. On utilise ici un élément BH (typiquement un DOE pour « Diffractive Optical Element ») configuré pour homogénéiser le faisceau et disposé sur le trajet optique du faisceau.

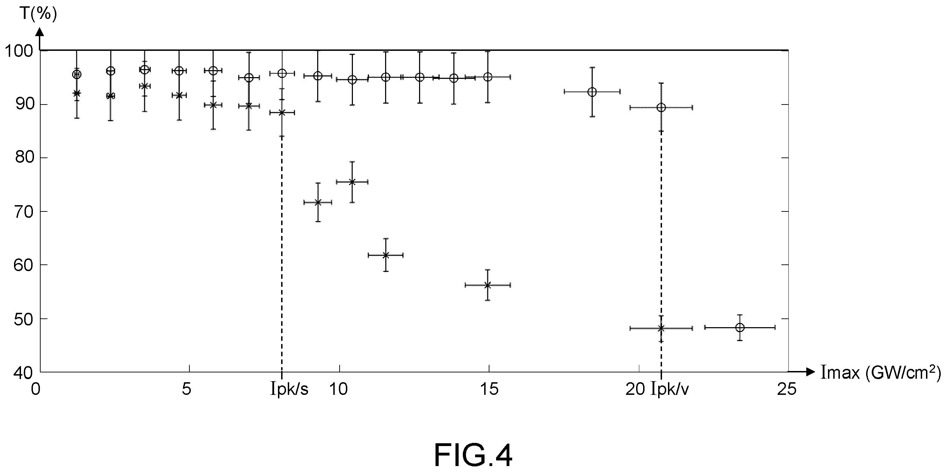

La figure 4 illustre l'évolution de la transmission T en fonction de l'intensité maximale Imax atteinte dans le milieu de confinement, obtenue pour une intensité à la surface du liquide Isl donnée, que l'on fait varier (via la variation de l'énergie du laser). L'intensité Isl se déduit aisément de Ei avec la formule (1) et la connaissance du diamètre du faisceau à la surface.

Dans le cas A, comme l'épaisseur de liquide est fine, l'intensité est sensiblement identique partout, en surface du liquide ou dans la profondeur de la cuve. On considère donc l'intensité Imax comme l'intensité incidente à la surface du liquide Isl : Imax ≅ Isl. Cette intensité Imax sera également égale à celle à la surface de la cible en contact avec le milieu de confinement, dénommée Ist, lorsqu'il y aura une cible.

Pour le cas B le système COD combiné à l'élément BH est configuré pour concentrer la lumière selon un diamètre minimal connu de 1,5 mm à l'intérieur du volume du liquide. Connaissant l'énergie incidente et le diamètre minimal on en déduit l'intensité Imax associée.

Ainsi l'abscisse Imax de la figure 4 correspond à l'intensité maximale obtenue dans le liquide (soit en surface soit en volume).

Cette intensité Imax obtenue dans le liquide est donc potentiellement l'intensité maximale que l'on peut obtenir en surface de la cible pour la génération de l'onde de choc.

Sur la figure 4 les points en croix correspondent aux valeurs obtenues avec la mesure selon A et les points en cercle aux valeurs obtenues avec la mesure selon B.

On retrouve avec les croix le phénomène de claquage en surface connu de l'état de l'art, avec un seuil expérimental, que nous dénommerons Ibk/s, autour de 8GW/cm$^2$. Ce résultat est cohérent avec les résultats obtenus par Arnaud Sollier (voir publications précitées) décrivant l'apparition d'un plasma de claquage à la surface du milieu de confinement pour des seuils d'intensité de claquage entre 4 et 10 GW/cm$^2$ en fonction des paramètres laser utilisés.

Le point novateur est la variation de T obtenue avec les cercles, qui fait apparaitre un nouveau seuil, que nous dénommerons Ibk/v, correspondant à un claquage dans le volume du liquide, prenant naissance à l'endroit où l'intensité est la plus élevée. Ce seuil est d'environ 20-21 GW/cm$^2$, soit supérieur à Ibk/s.

Ainsi avec cette mesure les inventeurs ont démontré qu'il existe deux seuils de claquage et non pas un seul : un seuil de claquage en surface que nous dénommerons Ibk/s et un seuil de claquage en volume Ibk/v. En outre ces mesures ont permis de déterminer une valeur de ces deux seuils, pour une même durée d'impulsion laser et une même longueur d'onde, et d'en déduire que le seuil en volume est plus élevé que le seuil en surface : Ibk/v > Ibk/s.

On définit le ratio

$$R = \frac{I_{bk/v}}{I_{bk/s}}$$

Pour le couple ($\tau$=7.2 ns ; $\lambda$=532 nm) on a R ≅ 2.5

L'existence de ce ratio R combiné au fait qu'il soit supérieur à 1 est un résultat important. Il signifie que lorsqu'on utilise une épaisseur de matériau de confinement plus grande on peut obtenir sur la cible une intensité Ist plus importante avant claquage que lorsqu'on utilise une faible épaisseur.

La mise en évidence de ces deux seuils de claquage, l'un en surface, prédominant lorsque la couche de confinement est fine, et l'autre en volume, apparaissant lorsque la couche de confinement devient plus épaisse, ainsi que la détermination expérimentale du paramètre R>1 reliant les deux seuils, est une véritable découverte qui n'avait jamais été mise évidence jusque-là.

En d'autres termes ces travaux démontrent pour la première fois que, à paramètres laser constants, le seuil de claquage dans le milieu de confinement est supérieur si le claquage se produit en volume du milieu de confinement plutôt qu'à sa surface (typiquement de 8-10 GW/cm$^2$ à 20-25 GW/cm$^2$ pour des impulsions de 7.2 ns avec un confinement d'eau).

Avec une épaisseur e du milieu de confinement traversée suffisante on évite un claquage en surface du milieu de confinement (le laser n'est pas encore focalisé à la surface, donc l'intensité laser y est localement faible), ce claquage étant déporté en volume au cœur du milieu de confinement, là où l'intensité seuil de claquage est plus élevée qu'en surface. Ainsi, l'intensité maximale pouvant irradier la cible (pour un même jeu de paramètres laser) est augmentée, donc la pression maximale générée l'est aussi. Dans l'exemple précédent avec un claquage en volume on peut transmettre une pression sur cible de 12 GPa (correspondant à l'intensité seuil de 20-22 GW/cm$^2$), contre 8 GPa (8-10 GW/cm$^2$) avec le claquage conventionnel en surface.

Plusieurs autres mesures expérimentales et des déductions physiques montrent que la valeur de ce ratio R dépend du matériau de confinement considéré et reste relativement stable sur une plage de durée d'impulsion [1-30ns]. Pour l'eau on a R compris entre 2.5 et 3. De manière plus générale pour les conditions laser et les matériaux de confinement d'intérêt en choc laser les inventeurs ont déterminé que R est typiquement compris entre 2 et 4.

On déduit du fait que R>1 que s'il y a un claquage en surface, l'intensité maximale qui sera atteinte sera de $I_{bk/s}$ et l'intensité sur cible est au plus égal à $I_{bk/s}$. De même pour un claquage en volume, l'intensité cible maximale est au plus égale à $I_{bk/v}$. Pour maximiser l'intensité maximale sur la cible, il faut donc se mettre dans les conditions pour avoir un claquage en volume, et ce claquage se produira au niveau de la cible en positionnant celle-ci là où le laser est le plus concentré (plus forte intensité).

Autrement dit, il faut donc designer le système de choc laser pour que lorsque l'intensité sur cible (Ist) vaut $I_{bk/v}$, on ait moins que $I_{bk/s}$ en surface du milieu de confinement (Isl). En effet si tel n'était pas le cas cela voudrait dire par exemple que lorsqu'on a $I_{bk/v}$ sur cible, il y a déjà plus que $I_{bk/s}$ en surface... donc il y a déjà un claquage en surface, donc il ne peut en fait pas y avoir $I_{bk/v}$ sur cible (absurde).

Cela signifie donc que l'on doit avoir

$$I_{sl} \leq \frac{I_{st}}{R} : \qquad (2)$$

La réalisation de la condition (2) assure que lorsqu' il y a un claquage en surface ($I_{sl} = I_{bk/s}$) alors l'intensité sur cible est au moins égale à $I_{bk/v}$, et donc en fait il y a un claquage en volume avant le claquage en surface: on a maximisé l'intensité possible sur cible (comme le seuil est plus élevé en volume qu'en surface, il faut se mettre dans des conditions pour que le claquage arrive d'abord en volume, ce qui n'est jamais le cas avec une épaisseur d'eau de 1 mm).

On a déterminé expérimentalement une valeur minimale de R, Rmin =2

Ainsi le système de choc laser vérifie :

$$I_{sl} \leq \frac{I_{st}}{2} \qquad (3)$$

Ces intensités, à la surface du liquide et dans le liquide à la surface de la cible, peuvent être mesurées par exemple avec un joulemètre ou une photodiode.

Compte tenu de ce qui est expliqué plus haut on aura donc toujours un claquage en volume pour les lasers et les milieux de confinement d'intérêt.

Le respect de cette condition (3) est un résultat obtenu par les inventeurs qui permet de réaliser un design du système de choc laser selon l'invention, qui privilégie le claquage en volume. Le système de choc laser selon l'invention exploite la démonstration expérimentale de l'existence d'un seuil de claquage plus élevé en volume qu'en surface du milieu de confinement.

L'invention concerne un système 10 de traitement d'une cible Tar par choc laser en régime de confinement dans un liquide Liq tel qu'illustré figure 5. Le système comprend un laser impulsionnel L générant un faisceau B présentant une durée d'impulsion $\tau$ comprise entre 1 ns et 30 ns et une longueur d'onde $\lambda$ et un dispositif optique de concentration COD présentant une focale f et configuré pour concentrer le faisceau B à la surface St de la cible. Le faisceau laser incident sur le dispositif de concentration COD présente un diamètre D. Le système comprend également une cuve TK remplie dudit liquide, le liquide présentant un indice n.

Dans un système de choc laser, le diamètre du faisceau Dst sur la surface St de la cible qui est illuminée par le faisceau constitue un paramètre d'entrée, qui est fonction de l'application et de la nature du matériau traité. Pratiquement ce diamètre Dst souhaité varie entre 0.3 mm à 10 mm, préférentiellement entre 0.8 et 5 mm.

A partir des paramètres d'entrée (D, f, n, Dst) la cible est disposée dans la cuve de sorte que le faisceau traverse une épaisseur e de liquide, avant d'atteindre la surface St de la cible, choisie afin qu'une intensité laser à la surface du liquide (Isl) soit inférieure ou égale à une intensité laser à la surface de la cible (Ist) divisée par 2 (condition (3)).

Les paramètres d'entrée fixés, le respect de la condition (3) permet de déterminer une épaisseur minimale $e_{min}$ de liquide à respecter.

On a :

$$\tan(\theta) = \frac{D}{2f} \qquad (4) \quad \text{et} \quad \tan(\theta_r) = \frac{x}{e} \qquad \text{(voir figure 5)}$$

Et avec les lois de la réfraction :

$$\sin(\theta) = n \sin(\theta_r) \qquad (5)$$

n indice de réfraction du liquide.

De plus :

$$D_{st} = D_{sl} - 2e\tan(\theta_r) \quad (6)$$

L'intensité I est définie par :

$$I = \frac{E}{S\tau}$$

avec E énergie du laser par pulse (J), $\tau$ durée d'impulsion (ns), S surface irradiée (cm).

Donc $I \propto \frac{1}{DE^2}$, où DE est le diamètre de la surface éclairée

De la relation (2) on déduit : $RD^2_{st} \leq D^2_{sl}$ d'où $\sqrt{R}\, D_{st} \leq D_{sl}$

De la relation (6) on déduit $(\sqrt{R} - 1)D_{sl} \leq 2e\tan(\theta_r)$

$$=> e \geq \frac{D_{st}(\sqrt{R}-1)}{2\tan(\theta_r)} \quad (7)$$

Avec les relations (4) et (5) on peut exprimer tan(θr) en fonction des paramètres D, f et n, ce qui aboutit à :

$$e \geq \frac{D_{st}(\sqrt{R}-1)}{2\tan\left(\arcsin\left(\frac{\arctan\left(\frac{D}{2f}\right)}{n}\right)\right)} \quad (8)$$

En prenant la valeur de R minimale, soit Rmin=2, on en déduit une valeur de $e_{min}$ qui est suffisante pour tous les systèmes d'intérêt:

$$e_{min} = \frac{D_{st}(\sqrt{2}-1)}{2\tan\left(\arcsin\left(\frac{\arctan\left(\frac{D}{2f}\right)}{n}\right)\right)} \quad (9)$$

Le système laser est, selon l'invention, configuré de sorte que l'épaisseur e de liquide traversée par le faisceau avant d'atteindre la surface de la cible est choisie supérieure ou égale à $e_{min}$. Dans ce cas on a l'intensité laser à la surface du liquide Isl qui est inférieure ou égale à une intensité laser à la surface de la cible Ist divisée par 2.

L'épaisseur $e_{min}$ dépend des paramètres D, f, n et Dst du système 10. A titre d'exemple pour D=20mm, f = 500 mm n=1,33 (eau) et Dst = 4 mm on a $e_{min}$ = 55 mm.

Dans la pratique on dimensionnera le système 10 en prenant par exemple 10-15 cm d'eau pour couvrir l'ensemble des cas intéressants tout en assurant le respect de la condition (3).

A noter que le calcul ci-dessus ceci est valide pour un faisceau laser gaussien à partir du moment où on est en champ lointain (c'est-à-dire, loin du « waist », où le laser fait quelques microns de diamètre, au foyer de la lentille). Dans un système de choc laser on est toujours dans ces conditions (tache laser Dst $\geq$300$\mu$m).

Pour les petits angles la formule (9) se simplifie :

$$e_{min} = \frac{D_{st}(\sqrt{2}-1)}{2} * \sqrt{4N^2n^2 - 1} \quad (10)$$

Avec

$$N=f/D$$

Le dimensionnement du système de choc laser selon l'invention relie l'ouverture numérique du système (ON=D/2f) à l'épaisseur de liquide utilisée pour déporter le claquage en surface du confinement vers le volume du confinement.

On voit sur la formule (9) le système/l'épaisseur d'eau dépend de la taille de la tache Dst, c'est-à-dire que s'il faut 3 mm pour traiter du Titane et 1 mm pour traiter de l'Aluminium, on détermine deux 2 épaisseurs minimales de cuve différentes. Dans la pratique l'industriel concepteur du système de choc laser utilisera la même cuve, qui présente une épaisseur supérieure au plus grand $e_{min}$, et sa cuve sera fonctionnelle pour les deux matériaux.

Le système laser selon l'invention peut s'adapter à l'ouverture numérique (D/2f) du système utilisé, suivant les besoins, en déterminant l'épaisseur minimale de liquide à utiliser afin de déporter le claquage de la surface vers le volume.

A noter que le système 10 selon l'invention est compatible d'une architecture dans laquelle on a e=f, qui correspond à un dispositif COD immergé dans la cuve, dès l'instant que e vérifie la condition e $\geq$ $e_{min}$.

A l'autre extrême le système 10 est compatible d'une relativement faible épaisseur couche d'eau à condition de considérer une optique de COD très ouverte, qui garantit que $I_{sl} \leq \dfrac{I_{st}}{2}$ . Cette configuration présente cependant l'inconvénient de rapprocher l'optique de la cible, ce qui n'est pas souhaitable.

De manière générale plus l'optique du COD est ouverte plus on peut diminuer l'épaisseur de la couche de confinement. Une hauteur d'eau autour de 10-15 cm induit une ouverture D/2f faible, ce qui est un avantage car une ouverture importante peut endommager les optiques, car elles seront proches de la cible (éjection d'eau et de particules métalliques, par le plasma par exemple). De plus avec une hauteur d'eau typiquement d'au moins 10 cm les projections sur la lentille sont inexistantes. Les paramètres D et f du système sont typiquement un faisceau laser de diamètre sur le COD compris entre 15 et 30 mm et une distance de focalisation d'environ 20-30 cm.

Ainsi un système de choc laser 10 designé selon l'invention permet d'éviter un claquage en surface du milieu de confinement (le laser n'est pas encore focalisé à la surface, donc l'intensité laser y est localement trop faible pour amorcer un claquage). Ce claquage est déporté en volume au cœur du milieu de confinement, à une intensité seuil plus élevée. Ainsi, l'intensité maximale pouvant irradier la cible (pour un même jeu de paramètres laser) est augmentée, donc la pression maximale générée l'est aussi.

Avec un système laser selon l'invention on augmente sensiblement les pressions générées (environ + 50%). Ce système est relativement simple à mettre en œuvre. Il utilise des lasers et dispositifs de concentration existants et une cuve remplie par typiquement 10-15 cm d'un liquide de confinement dans lequel on immerge la cible.

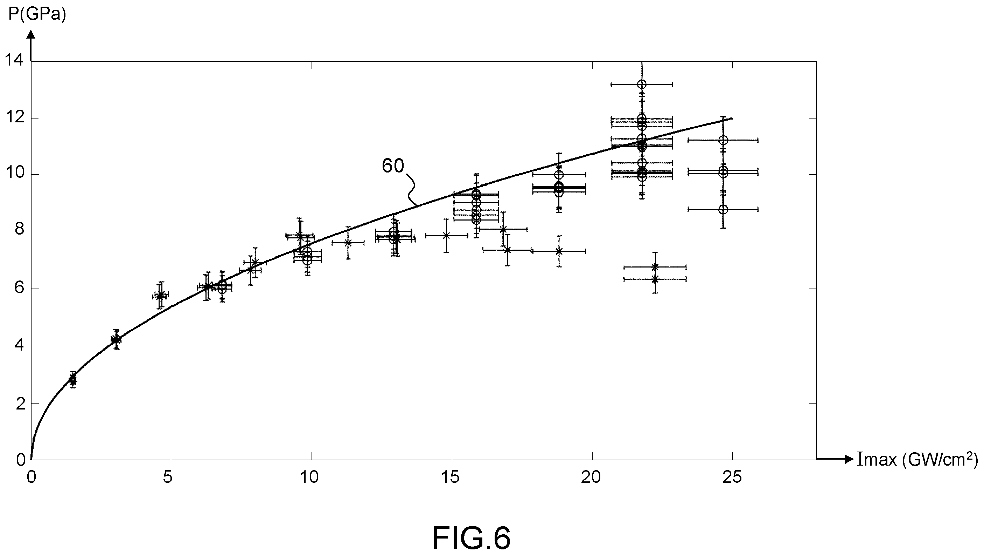

La figure 6 illustre la pression P appliquée via le plasma de confinement en fonction de Imax pour les deux cas précédents (points croix couche d'eau de 2 mm, points cercle couche d'eau de 15 cm). La courbe 60 est une simulation numérique basée sur un calcul fait avec un code 1D d'interaction laser matière qui ne prend pas en compte les phénomènes de claquage (on calcule juste la pression résultante d'une impulsion laser incidente donnée, absorbée par la cible).

On constate pour le cas d'une couche fine (croix) qu'au-delà d'une intensité d'environ 10 GW/cm² (correspondant à Ibk/s) la pression générée stagne à environ 8 GPa puis diminue. Le claquage en surface limite l'intensité illuminant la cible. Pour une couche plus épaisse (cercle) la pression générée suit l'augmentation de Imax au moins jusqu'à 22 GW/cm² et atteint une valeur de 12 GPa, soit une augmentation de plus de 40% par rapport à la couche fine. En outre l'évolution suit plus longtemps la courbe théorique sans claquage, ce qui montre bien que les problèmes liés au claquage sont déportés aux intensités plus élevées.

Selon un mode de réalisation le système 10 comprend en outre un élément BH configuré pour homogénéiser le faisceau et disposé sur le trajet optique dudit faisceau. La présence d'un homogénéiseur de faisceau (typiquement un DOE) permet de s'assurer de ne pas avoir de surintensités dans le profil spatial du laser, et donc d'éviter les claquages locaux (ce qui conduirait à une perte locale d'intensité transmise sur cible).

Afin de réaliser un choc laser préférentiellement l'énergie E du laser (par pulse) et le dispositif optique de concentration sont configurés de sorte que intensité laser à la surface de la cible Ist est comprise entre 0.1 GW/cm² et 25 GW/cm² et la valeur Dst est comprise entre 0.3 à 10 mm.

Selon un mode de réalisation on choisit le couple ($\lambda$, liquide) de sorte que le liquide Liq présente un coefficient d'absorption $\alpha(\lambda)$ inférieur ou égal à 0.1/m², c'est-à-dire utilise rune longueur d'onde peu absorbée par le milieu de confinement.

Préférentiellement le liquide est l'eau et la longueur d'onde $\lambda$ du laser est comprise dans l'intervalle [350 nm ;600 nm]. La longueur d'onde de 532 nm est préférée, par rapport la longueur d'onde de 1064 nm fréquemment utilisée en choc laser avec une fine couche d'eau.

Selon un autre aspect l'invention concerne un procédé de traitement d'une cible Tar par choc laser en régime de confinement dans un liquide Liq comprenant :

- disposer d'une cuve remplie dudit liquide Liq et contenant la cible Tar,

- générer un faisceau B présentant une durée d'impulsion $\tau$ comprise entre 1 ns et 30 ns avec un laser impulsionnel,

- concentrer le faisceau B à la surface de la cible immergée avec un dispositif optique de concentration COD de focale f, le faisceau incident sur le dispositif optique de concentration présentant un diamètre D.

- positionner la cible dans la cuve puis illuminer la surface avec le faisceau, de sorte que le faisceau traverse une épaisseur e de liquide choisie de sorte qu'une intensité laser à la surface du liquide Isl étant alors strictement inférieure à une intensité laser à la surface de la cible Ist divisée par 2.

**Revendications**

1. Système (10) de traitement d'une cible (Tar) par choc laser en régime de confinement dans un liquide (Liq), le système comprenant :

   - un laser impulsionnel (L) générant un faisceau (B) présentant une durée d'impulsion $\tau$ comprise entre 1 ns et 30 ns et une longueur d'onde $\lambda$,
   - un dispositif optique de concentration (COD) présentant une focale f et configuré pour concentrer le faisceau (B) à la surface (St) de la cible, le faisceau laser incident sur le dispositif de concentration présentant un diamètre D, le système étant **caractérisé par** :

     - une cuve (TK) remplie dudit liquide présentant un indice de réfraction n,

   une valeur souhaitée du diamètre du faisceau sur une surface (St) de la cible étant prédéterminée et dénommée Dst,
   une épaisseur e de liquide traversée par le faisceau avant d'atteindre la surface de la cible étant choisie de manière à ce qu'une intensité laser à la surface du liquide (Isl) soit inférieure ou égale à une intensité laser à la surface de la cible (Ist) divisée par 2, l'épaisseur e étant choisie supérieure ou égale à une épaisseur minimale $e_{min}$ définie par :.

$$e_{min} = \frac{D_{st}(\sqrt{2} - 1)}{2 \tan\left( \arcsin\left( \frac{\arctan\left(\frac{D}{2f}\right)}{n} \right) \right)}$$

   avec n indice de réfraction dudit liquide.

2. Système selon l'une des revendications précédentes comprenant en outre un élément (BH) configuré pour homogénéiser le faisceau et disposé sur le trajet optique dudit faisceau.

3. Système selon l'une des revendications précédentes dans lequel une énergie E du laser et le dispositif optique de concentration sont configurés de sorte que l'intensité laser à la surface de la cible (Ist) est comprise entre 0.1 GW/cm$^2$ et 25 GW/cm$^2$ et ladite valeur prédéterminée Dst est comprise entre 0.3 à 10 mm.

4. Système selon l'une des revendications précédentes dans lequel le liquide présente un coefficient d'absorption ($\alpha$) à ladite longueur d'onde $\lambda$ inférieur ou égal à 0.1/m$^2$.

5. Système selon l'une des revendications précédentes dans lequel le liquide est l'eau et la longueur d'onde $\lambda$ du laser est comprise dans l'intervalle [350 nm ;600 nm].

6. Procédé de traitement d'une cible (Tar) par choc laser en régime de confinement dans un liquide (Liq) comprenant :

   - disposer d'une cuve remplie dudit liquide et contenant la cible,
   - générer un faisceau (B) présentant une durée d'impulsion $\tau$ comprise entre 1 ns et 30 ns avec un laser impulsionnel,
   - concentrer le faisceau (B) à la surface de la cible immergée avec un dispositif optique de concentration (COD) de focale f, le faisceau incident sur le dispositif optique de concentration présentant un diamètre D, le procédé étant **caractérisé par** :

     - positionner la cible dans la cuve puis illuminer la surface avec le faisceau, de sorte que le faisceau traverse une épaisseur e de liquide au moins égale à une épaisseur minimale $e_{min}$ avant d'atteindre la surface de la cible et de sorte que le diamètre du faisceau sur la surface de la cible (St) soit égal à une valeur prédéterminée Dst, l'épaisseur minimale de liquide $e_{min}$ étant définie par :

$$e_{min} = \frac{D_{st}(\sqrt{2}-1)}{2\tan\left(\arcsin\left(\frac{\arctan\left(\frac{D}{2f}\right)}{n}\right)\right)}$$

avec n indice de réfraction dudit liquide,
une intensité laser à la surface du liquide (Isl) étant alors strictement inférieure à une intensité laser à la surface de la cible (Ist) divisée par 2.

## Patentansprüche

1. System (10) zum Behandeln eines Ziels (Tar) durch Laserstöße unter einer Einschlussbedingung in einer Flüssigkeit (Liq), wobei das System Folgendes umfasst:

   - einen Impulslaser (L), der einen Strahl (B) erzeugt, der eine Impulsdauer $\tau$ zwischen 1 ns und 30 ns und eine Wellenlänge $\lambda$ aufweist,
   - eine optische Konzentrationsvorrichtung (COD), die eine Brennweite f aufweist und dafür konfiguriert ist, den Strahl (B) auf die Oberfläche (St) des Ziels zu konzentrieren, wobei der auf die Konzentrationsvorrichtung treffende Laserstrahl einen Durchmesser D aufweist,
   wobei das System **gekennzeichnet ist durch**:

   - eine Wanne (TK), die mit der Flüssigkeit gefüllt ist, die einen Brechungskoeffizienten n aufweist,

   wobei ein gewünschter Wert des Durchmessers des Strahls auf einer Oberfläche (St) des Ziels vorbestimmt und mit Dst bezeichnet ist,
   wobei eine Dicke e von Flüssigkeit, die vor Erreichen der Oberfläche des Ziels von dem Strahl gequert wird, so ausgewählt ist, dass eine Laserintensität an der Oberfläche der Flüssigkeit (Isl) kleiner oder gleich einer Laserintensität an der Oberfläche des Ziels (Ist) geteilt **durch** 2 ist, wobei die Dicke e größer oder gleich einer Mindestdicke $e_{min}$ ausgewählt ist, definiert **durch**:

   $$e_{min} = \frac{D_{st}(\sqrt{2}-1)}{2\tan\left(\arcsin\left(\frac{\arctan\left(\frac{D}{2f}\right)}{n}\right)\right)}$$

   wobei n der Brechungskoeffizient der Flüssigkeit ist.

2. System nach einem der vorhergehenden Ansprüche, ferner umfassend ein Element (BH), das dafür konfiguriert ist, den Strahl zu homogenisieren und auf dem Lichtweg des Strahls angeordnet ist.

3. System nach einem der vorhergehenden Ansprüche, wobei eine Energie E des Lasers und die optische Konzentrationsvorrichtung so konfiguriert sind, dass die Laserintensität an der Oberfläche des Ziels (Ist) zwischen 0,1 GW/cm$^2$ und 25 GW/cm$^2$ liegt und der vorbestimmte Wert Dst zwischen 0,3 und 10 mm liegt.

4. System nach einem der vorhergehenden Ansprüche, wobei die Flüssigkeit einen Absorptionskoeffizienten ($\alpha$) mit der Wellenlänge $\lambda$ kleiner oder gleich 0,1/m$^2$ aufweist.

5. System nach einem der vorhergehenden Ansprüche, wobei die Flüssigkeit Wasser ist und die Wellenlänge $\lambda$ des Lasers in dem Intervall [350 nm; 600 nm] liegt.

6. Verfahren zum Behandeln eines Ziels (Tar) durch Laserstöße unter einer Einschlussbedingung in einer Flüssigkeit (Liq), umfassend:

   - Verfügen über eine mit der Flüssigkeit gefüllte Wanne, die das Ziel enthält,
   - Erzeugen eines Strahls (B), der eine Impulsdauer $\tau$ zwischen 1 ns und 30 ns mit einem Impulslaser aufweist,
   - Konzentrieren des Strahls (B) auf die Oberfläche des eingetauchten Ziels mit einer optischen Konzentrationsvorrichtung (COD) mit der Brennweite f, wobei der auf die optische Konzentrationsvorrichtung treffende Strahl einen Durchmesser D aufweist, wobei das Verfahren **gekennzeichnet ist durch**:
   - Positionieren des Ziels in der Wanne, dann Beleuchten der Oberfläche mit dem Strahl, so dass der Strahl eine Dicke e von Flüssigkeit mindestens gleich einer Mindestdicke $e_{min}$ vor Erreichen der Oberfläche des Ziels quert, und so dass der Durchmesser des Strahls auf der Oberfläche des Ziels (St) gleich einem vorbestimmten Wert Dst ist,

   wobei die Mindestdicke von Flüssigkeit $e_{min}$ definiert ist **durch**:

$$e_{min} = \frac{D_{st}(\sqrt{2}-1)}{2\tan\left(\arcsin\left(\frac{\arctan\left(\frac{D}{2f}\right)}{n}\right)\right)}$$

   wobei n der Brechungskoeffizient der Flüssigkeit ist,
   wobei eine Laserintensität an der Oberfläche der Flüssigkeit (Isl) dann deutlich kleiner als eine Laserintensität an der Oberfläche des Ziels (Ist) geteilt **durch** 2 ist.

## Claims

1. A system (10) for treating a target (Tar) by laser shock in a regime of confinement in a liquid (Liq), the system comprising:

   - a pulsed laser (L) generating a beam (B) having a pulse duration $\tau$ of between 1 ns and 30 ns and a wavelength $\lambda$,
   - a concentrating optical device (COD) having a focal length f and configured to concentrate the beam (B) on the surface (St) of the target, the incident laser beam on the concentrating device having a diameter D, the system being **characterised by** :

     - a tank (TK) filled with said liquid having a refractive index n,

   a desired value of the diameter of the beam on a surface (St) of the target being predetermined and named Dst, a thickness e of liquid passed through by the beam before reaching the surface of the target being chosen such that a laser intensity on the surface of the liquid (Isl) is less than or equal to a laser intensity on the surface of the target (Ist) divided by 2, the thickness e being chosen to be greater than or equal to a minimum thickness $e_{min}$ defined by:

$$e_{min} = \frac{D_{st}(\sqrt{2}-1)}{2\tan\left(\arcsin\left(\frac{\arctan\left(\frac{D}{2f}\right)}{n}\right)\right)}$$

   n being the refractive index of said liquid.

2. The system according to one of the preceding claims, further comprising an element (BH) configured to homogenise the beam and disposed on the optical path of said beam.

3. The system according to one of the preceding claims, wherein an energy E of the laser and the concentrating optical device are configured such that the laser intensity on the surface of the target (Ist) is between 0.1 GW/cm$^2$ and 25

GW/cm$^2$ and said predetermined value Dst is between 0.3 and 10 mm.

4. The system according to one of the preceding claims, wherein the liquid has an absorption coefficient ($\alpha$) at said wavelength $\lambda$ of less than or equal to 0.1/m$^2$.

5. The system according to one of the preceding claims, wherein the liquid is water and the wavelength $\lambda$ of the laser lies within the range [350 nm; 600 nm].

6. A method for treating a target (Tar) by laser shock in a regime of confinement in a liquid (Liq) comprising:

   - having a tank filled with said liquid and containing the target,
   - generating a beam (B) having a pulse duration $\tau$ of between 1 ns and 30 ns with a pulsed laser,
   - concentrating the beam (B) on the surface of the immersed target with a concentrating optical device (COD) of focal length f, the incident beam on the concentrating optical device having a diameter D,
   the method being **characterised by**:

   - positioning the target in the tank then illuminating the surface with the beam, such that the beam passes through a thickness e of liquid at least equal to a minimum thickness $e_{min}$ before reaching the surface of the target and such that the diameter of the beam on the surface of the target (St) is equal to a predetermined value Dst,

   the minimum thickness of liquid $e_{min}$ being defined by:

$$e_{min} = \frac{D_{st}(\sqrt{2} - 1)}{2 \tan\left(\arcsin\left(\frac{\arctan\left(\frac{D}{2f}\right)}{n}\right)\right)}$$

   n being the refractive index of said liquid.
   a laser intensity on the surface of the liquid (Isl) then being strictly less than a laser intensity on the surface of the target (Ist) divided by 2.

FIG.1

FIG.2

FIG.3

EP 4 263 110 B1

**FIG.4**

FIG.5

FIG.6

EP 4 263 110 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019010576 A1
- CN 201210571521
- US 10745776 B
- WO 2015062457 A


**Littérature non-brevet citée dans la description**

- **SOLLIER et al.** Laser-matter interaction in laser chock processing. *First international symposium on High power laser Macroprocessing, SPIE*, 2003, vol. 4831, 463-467
- **J.T WANG et al.** Effects of laser shock peening on stress corrosion behavior of 7075 aluminium alloy laser welded joints. *Material Science & Engineering A647*, 2015, 7-14
- **BERTHE et al.** State-of-the-art laser adhesion test (LASAT). *Nondestructive Testing and Evaluation*, 2011, vol. 26, 303-317
- **MONTROSS et al.** Laser shock processing and its effects on microstructure and properties of metal alloys: a review. *International Journal of Fatigue*, 2002, vol. 24, 1021-1036
- **FABBRO et al.** Physical study of laser produced plasma in confined geometry. *Journal of Applied Physics*, 1990, vol. 68 (2), 775-784
- **SOLLIER et al.** Numerical modeling of the transmission of breakdown plasma generated in water during laser shock processing. *Eur. Phys. AP*, 2001, vol. 16, 131-139